# EUROPÄISCHE PATENTANMELDUNG

(11) **EP 2 517 548 A1**
(43) Veröffentlichungstag der Anmeldung: **31.10.2012**
(21) Anmeldenummer: 12003027.5
(22) Anmeldetag: 30.04.2012
(51) Int. Cl.: A01D 34/86, A01D 34/80

(54) **Mäheinrichtung**

(30) Priorität: 30.04.2011 DE 102011010282
(71) Anmelder: Baumgärtner, Peter, 73566 Bartholoma (DE)
(72) Erfinder: Baumgärtner, Peter, 73566 Bartholoma (DE)
(74) Vertreter: Fürst, Siegfried

(57) **Zusammenfassung**

Die Erfindung betrifft eine Mäheinrichtung für Mähfahrzeuge (1), die insbesondere zum Mähen von Bewuchs von Straßenrandstreifen oder Flächen mit Hindernissen, wie Bäume, Pfosten, Verkehrsschilder, Leitplanken und dergleichen einsetzbar ist, und bestehend aus einer Trägereinheit sowie - Mitteln zur Verbindung eines Mähbalkens (17) mit der Trägereinheit, und - hydraulischen Antriebsmitteln, wobei die Mittel derart sind, dass der Mähbalken (17) von einer Transportstellung in eine Arbeitsstellung und wieder zurück schwenkbar ist, wobei die Mittel aber auch derart sind, dass beim Arbeiten, also dem Mähen, der Mähbalken (17) in seiner Höhenlage zum zu mähenden Gelände und in seiner Neigung zum zu mähenden Gelände und in seiner Position zum Fahrzeug (1) variabel beweglich ist, wobei diese variable Beweglichkeit derart ist, dass ausgehend von einer Grundstellung für das Mähen der Mähbalken (17) bzw. der wenigstens eine an ihm angeordnete Schneidkopf dem jeweiligen Geländeprofil folgt, wobei der Grundantrieb der Mäheinrichtung hydraulisch ist, wobei der wenigstens eine bzw. die Schneidköpfe mittels Zahnriementrieb oder Kettentrieb oder Seilzugtrieb angetrieben werden, und wobei deren Antrieb ein Hydraulikmotor ist, der vorzugsweise an einem Abschnitt des Mähbalkens (17), vorzugsweise an dessen innerem Abschnitt (17c) angeordnet ist.

## Beschreibung

Die Erfindung betrifft eine Mäheinrichtung, die für ihre Verwendung an ein Fahrzeug ankoppelbar ist, die insbesondere zum Mähen von Bewuchs von Straßenrandstreifen oder Flächen mit Hindernissen, wie Pfosten, Verkehrsschilder, Leitplanken, Bäume und dergleichen einsetzbar ist.

Es sind aus dem Stand der Technik eine Vielzahl von Schneidvorrichtungen für Rasenmäher, insbesondere zum Mähen von Gras bei Hindernissen und unter Absperrungen mit rotierenden Schneidwerkzeugen bekannt.

Aus der DE 37 36 032 A1 beispielsweise ein Straßenrandmäher zur Pflege der Straßenränder sowie der mit Bäumen bestandenen oder mit Straßenleitpfosten versehenen Landstraßen, mit einem Mähwerkzeug, das aus mehreren planetenartig um eine Mittelscheibe verteilt angeordneten Außenscheiben besteht, die drehbar an einem Balken bzw. Horizontalausleger angeordnet sind, um bei einem angefahrenen Hindernis dieses so umfahren zu können, dass dabei gleichzeitig der Bewuchs im Bereich des Hindernisses geschnitten wird.

In der DE 42 33 020 A1 wird ein Mähgerät zur Beseitigung des Grasbewuchses um im wesentlichen senkrecht aufragende Pfosten beschrieben, das drehbar gelagerte Mähköpfe an den Schenkeln eines U-förmigen Trägers aufweist, mit einer an dem Träger befestigten Antriebseinheit zum Drehantrieb der Mähköpfe sowie Übertragungsmittel zur Übertragung der Drehbewegung von der Antriebseinheit zu den Mähköpfen und Handhabungsmittel zum Bewegen des Trägers.

In der DE 31 08 614 A1 wird eine Mähvorrichtung zum Mähen von Gras unter Absperrungen, beispielsweise von Pfosten getragenen Straßenleitplanken, beschrieben, die zwei dem Boden benachbarte, voneinander unabhängige Schneidköpfe umfasst, deren Schnittbereiche sich in ihrer Normalstellung zumindest teilweise überdecken sowie elastische Vorspannmittel, welche die beiden Schneidköpfe gegeneinander vorspannen und Anschläge, welche die Bewegung der Schneidköpfe unter dem Einfluss der Vorspannung in ihrer Normalstellung begrenzen.

Aus der DE 20 2008 010 390 U1 ist weiterhin eine Zusatzeinrichtung für Rasenmäher zum Mähen von Bewuchs im Umkreis von Bäumen, Leitplanken, Pfosten und Randstreifen bekannt, die aus zwei an den Rasenmäher anzukoppelnden, schwenkbar ausgebildeten Schenkeln besteht, an deren vorderen Enden jeweils drehbar gelagerte, sich bei Hindernissen öffnende und schließende Führungsrollen angeordnet sind, und dass unter den Führungsrollen angetriebene Schneidköpfe angeordnet sind, die Messer aufweisen.

Ausgehend von diesem Stand der Technik liegt der Erfindung die Aufgabe zugrunde, ,eine an einem Fahrzeug wahlweise ankoppelbare Mäheinrichtung zu schaffen, mittels der das Mähen von Bewuchs im Umkreis von Pfosten, Leitplanken, Bäumen und dergleichen an Straßenrändern in einem Arbeitsgang sowie mit einem durchgängigen Ummähen der Hindernisse ausführbar, als auch eine anschließende Rückkehr der Schneidköpfe in eine Ausgangsstellung durchführbar ist. Eine weitere Aufgabe besteht darin, dass die Mäheinrichtung technisch einfach, unanfällig für Störungen und wartungsarm ist.

Zur Lösung dieser Aufgabe schlägt die Erfindung eine an einem Fahrzeug wahlweise ankoppelbare Mäheinrichtung mit den Merkmalen des Anspruches 1 vor. Die nachgeordneten, abhängigen Ansprüche 2 bis 17 zeigen Ausführungsvarianten der Erfindung auf.

Die neue, erfindungsgemäße Mäheinrichtung, welche zu ihrer Verwendung an ein Fahrzeug, im Folgenden Mähfahrzeug oder auch Trägerfahrzeug genannt, wahlweise ankoppelbar ist, besteht aus wenigstens einem wenigsten einen Schneidkopf aufweisenden Mähbalken und einer Trägereinheit sowie Mitteln zur Verbindung des Mähbalkens mit der Trägereinheit. Die Mittel sind dabei derart, dass der Mähbalken von einer Transportstellung in eine Arbeitsstellung und wieder zurück schwenkbar ist. Die Mittel sind aber auch derart, dass beim Arbeiten, also dem Mähen, der Mähbalken in seiner Höhenlage zum zu mähenden Gelände und in seiner Neigung zum zu mähenden Gelände sowie in seiner Position zum Fahrzeug variabel beweglich ist. Diese variable Beweglichkeit ist derart, dass ausgehend von einer Grundstellung für das Mähen der Mähbalken bzw. der wenigstens eine an ihm angeordnete Schneidkopf dem jeweiligen Geländeprofil folgt, ohne das er angesteuert werden muss.

Der Grundantrieb der Mäheinrichtung ist hydraulisch. Der wenigstens eine bzw. die Schneidköpfe werden erfindungsgemäß jedoch mittels Zahnriementrieb oder Kettentrieb oder Seilzugtrieb angetrieben. Für deren Antrieb ist ein Hydraulikmotor vorgesehen, der vorzugsweise an einem Abschnitt des Mähbalkens, vorzugsweise an dessen innerem Abschnitt, hier vorzugsweise an dem inneren Abschnitt seines Tragbalkens angeordnet ist.

Diese Ausführung der Erfindung bringt den Vorteil, dass im vorderen Bereich des Mähbalken, also in dem Bereich, der unmittelbar am Hindernis, den Pfosten, den Leitplanken und dergleichen Objekte,ist, anders als bei den im Stand der Technik bekannten Vorrichtungen, keine Hydraulikschläuche sind. Hierdurch werden Störungen im Arbeitsablauf, die durch Schnitte oder andere Defekte an den Hydraulikschläuchen wegen zeitweiligem oder längerem Kontakt mit den Hindernissen entstehen, vermieden, was nicht unwesentlich, also positiv auf die Arbeitskosten des Mähens und die Wartungskosten der Mäheinrichtung wirkt.

Nach einer Ausführungsvariante ist die Mäheinrichtung an einer Trägereinheit angeordnet, die an einem Mähfahrzeug angekoppelt ist. An der Trägereinheit ist der Mähbalken der Mäheinrichtung schwenkbar gehalten und in verschiedene Positionen für das Mähen oder den Transport, für kurze oder längere Entfernungen, verschiebbar; soweit nötig, kann eine gewählte und angefahrene Position arretiert werden.

Die über einem zu mähenden Gelände freitragend gehaltene und schwenkbare Mäheinrichtung nach der Erfindung hat drehbar gelagerte Führungselemente, vorzugsweise mechanisch wirkende Führungsrollen, und Schneidköpfe. Aie Mäheinrichtung ist in Arbeitsstellung für unterschiedliche Reichweiten ausfahrbar und zur Anpassung an unterschiedlichen Höhen und unterschiedlichen Neigungen von zu mähenden Geländen schwenkbar ausgebildet ist, wobei die Mäheinrichtung zum Ausgleich von Höhenunterschieden eine Senkrechtführung aufweist und wobei durch Schwenken eines an einem Mähbalken des Mähfahrzeuges angelenkten Dreiecklenkers auf dem zu mähenden Gelände'stehende Hindernisse, wie Bäume, Pfosten, Verkehrsschilder, Leitplanken und dergleichen durch eine kontinuierliche Weiterfahrt des Mähfahrzeuges ummähbar sind.

Vorteilhaft ist vorgesehen, dass die in Arbeitsstellung freitragend über einem zu mähenden Gelände gehaltene Mäheinrichtung mittels einer Schwenkeinrichtung in Verbindung mit einem Hydraulikzylinder sowohl in unterschiedliche Winkellagen entsprechend der Neigungsunterschiede des zu mähenden Geländes einstellbar, als auch in eine Transportstellung einstellbar vorgesehen ist. Dadurch, dass die Mäheinrichtung freitragend über einem zu mähenden Gelände gehalten ist, und nicht von einem Rad getragen wird, ist der technische Aufwand für die Mäheinrichtung durch Wegfall der Räder geringer und Äste oder Heckenteile können sich nicht an den Rädern verfangen, so dass der Mähvorgang unterbrochen werden muss. Eine vorteilhafte Weiterbildung wird auch darin gesehen, dass mittels einer am Mähfahrzeug quer zur Fahrtrichtung vorgesehenen Führung und einem zugeordneten Hydraulikzylinder die Mäheinrichtung für unterschiedliche Reichweiten quer zur Fahrtrichtung bewegbar ist, so dass Hindernisse beim Mähvorgang, z.B. beim Mähen unter Leitplanken größere Reichweiten für einen Mähbereich erreichbar sind.

Eine vorteilhafte Ausführungsform wird darin gesehen, dass die Mäheinrichtung sowohl eine an der Schwenkeinrichtung angeordnete, mittels Federelementen in einer Mittelstellung gehaltene Senkrechtführung zum Ausgleich von Höhenunterschieden des mähenden Geländes, als auch eine unterhalb der Senkrechtführung mittels Federelementen in einer Mittelstellung gehaltene Querführung zum seitlichen Ausgleich aufweist

Bevorzugt ist an der Querführung in einer Lagerstelle ein Mähbalken pendelnd gelagert, an dem ein Dreiecklenker drehbar angeordnet ist, derart, dass die an den einander gegenüberliegen Enden des Dreiecklenkers angeordneten Schenkel an ihren Enden drehbar gelagerte Führungsrollen aufweisen, und dass unterhalb der Führungsrollen Schneidköpfe vorgesehen sind, deren Messer nicht über die Mantelflächen der Führungsrollen hinausragen. Zusätzlich sind unterhalb der Schneidköpfe zur gleichmäßigen Höheneinstellung beim Mähvorgang Kontaktscheiben angeordnet, die während des Mähvorganges auf dem Geländeuntergrund aufliegen. Durch ein Federelement wird der Mähbalken gegen einen zu mähenden Geländeuntergrund gedrückt.

Aufgrund dieser erfindungsgemäßen Ausbildung der Mäheinrichtung ist es möglich, dass die Mäheinrichtung mittels der Schwenkeinrichtung in eine Transportstellung bewegbar ist, in der der Mähbalken mit den Führungsrollen, den Schneidköpfen und den Kontaktscheiben sicher gehalten ist und seitlich an dem Mähfahrzeug anliegt und nicht über die Begrenzung des Mähfahrzeuges hinausragt.

Eine bevorzugte Weiterbildung wird darin gesehen, dass die Führungsrollen in Ausgangsstellung mittels Federelementen in kontaktposition gehalten sind und beim Anfahren eines Hindernisses durch das Hindernis selbst gegen die Federkraft auseinander gedrückt werden und nach Ummähen des Hindernisses durch die Federelemente wieder in die Ausgangsstellung zurückführbar sind. Der Dreiecklenker wird dabei bei Anschlagen an das Hindernis so geschwenkt, dass das Hindernis bei Weiterfahrt des Mähfahrzeuges die beiden Führungsrollen so auseinander drückt, dass eine kontinuierliche Weiterfahrt des Mähfahrzeuges ausführbar ist. Die Schwenkbewegung des Dreiecklenkers selbst ist mittels eines am Trägerelement des Mähfahrzeuges angeordneten Anschlagelementes begrenzbar. Durch die freitragende Mäheinrichtung mit den federnd ausgebildeten Führungsrollen wird das zu ummähende Hindernis zum großen Teil selbst zentriert, dadurch ist nur ein grobes Anfahren nötig, das ist von Vorteil, wenn z.B. Pfosten so weit eingewachsen sind, dass ihre Standorte schwer einzuschätzen sind.

Eine weitere bevorzugte Ausführungsform der Mäheinrichtung besteht darin, dass die insbesondere scheibenförmig ausgebildeten Schneidköpfe und die Kontaktscheiben vorzugsweise aus Federstahl ausgebildet sind, wobei die Kontaktscheiben an den Schneidköpfen form, -stoff- oder kraftschlüssig befestigt sind, und bei Hindernissen ein leichtes selbsttätiges Abheben ermöglichen.

Der Antrieb der Schneidköpfe erfolgt über ein flexibles Antriebsmittel vom Antrieb des Mähfahrzeuges aus oder über einen eigenen Antrieb für die Schneidköpfe.

Die Erfindung wird nachfolgend anhand eines schematisch in Zeichnungen dargestellten, nicht einschränkenden Ausführungsbeispieles im weiteren und näher erläutert. Es zeigen:
- Fig. 1: ein Fahrzeug mit einer an dessen Frontseite angesetzten erfindungsgemäßen Mäheinrichtung, in Transportstellung;
- Fig. 2: das Fahrzeug nach Fig. 1 mit der Mäheinrichtung in Arbeitsstellung, mit waagerechter Lage des Mähbalkens;
- Fig. 3: das Fahrzeug mit der Mäheinrichtung in Arbeitsstellung, mit schräger Lage des Mähbalkens;
- Fig. 4: eine Detaildarstellung der Mäheinrichtung in waagerechter Stellung;
- Fig. 5: die Stellung der Führungsrollen der Mäheinrichtung mitsamt dem jeweils unter selbigen angeordnetem Schneidkörper nach dem Anfahren eines Hindernisses zu Beginn des Umschließen des Hindernisses;
- Fig. 6: die Stellung der Führungsrollen mitsamt Schneidkopf bei umschlossenem Hindernis;
- Fig. 7: die Stellung der Führungsrollen mitsamt Schneidkopf bei Freigabe des Hindernisses und
- Fig. 8: eine weitere Ausführung des erfindungsgemäßen Mähbalken mit drei Führungsrollen mitsamt jeweiligem Schneidkopf.

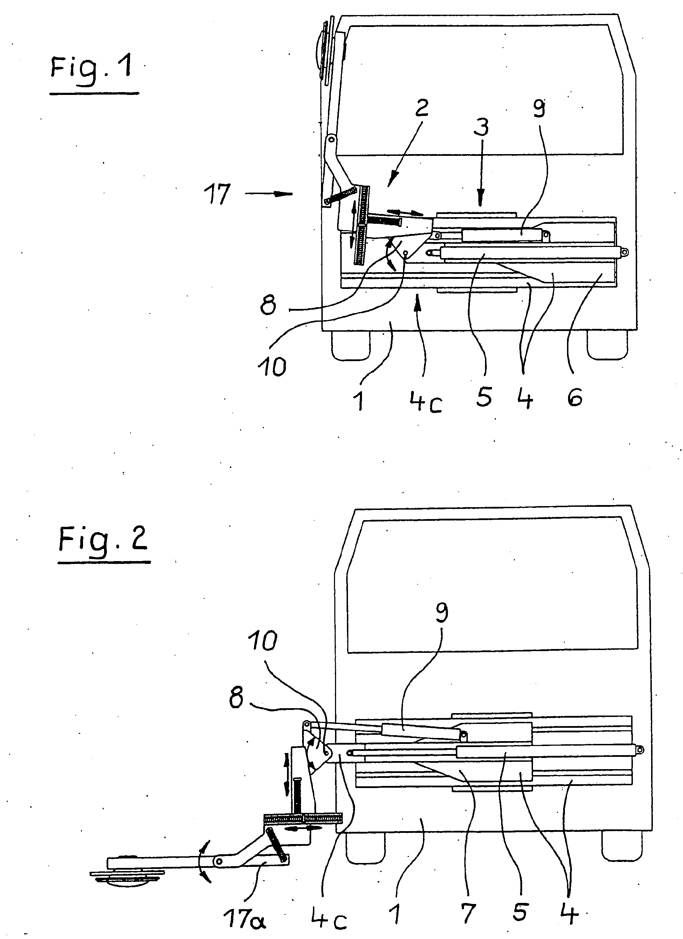

In den Figuren 1,2,3 ist ein Fahrzeug 1 (im weiteren Mähfahrzeug bzw. Trägerfahrzeug genannt) mit einer an dessen Front angeordneten erfindungsgemäße Mäheinrichtung 2 dargestellt; die Mäheinrichtung 2 ist in unterschiedlichen Funktions-Stellungen gezeigt.

In Figur 1 ist die Mäheinrichtung 2 in Transportstellung dargestellt. Die Mäheinrichtung 2 ist dazu vollkommen nach oben geklappt, liegt insbesondere seitlich an der Front des dem Mähfahrzeuges 1 an und ragt nicht über die Fahrzeugbegrenzung hinaus, so dass das Mähfahrzeug 1 ungehindert und sichtfrei im Straßenverkehr zu den Einsatzorten fahren kann.

Die erfindungsgemäße Mäheinrichtung 2 ist an einer Trägereinheit 3, die an dem Mähfahrzeuges 1 angekoppelt ist, befestigt, welche mittels einer Führung 4 und eines Hydraulikzylinders 5 quer zur Fahrtrichtung bewegbar ist.

Die Führung 4 besteht hier aus einer führenden Einheit 4a und einer geführten Einheit 4b. Von dem einen seitliche Abschnitt der geführte Einheit 4b, der zum Straßenrand hin, also zur Arbeitsseite hin gewandt ist, ragt ein verlängertes Teil in Form eines Auslegers 4c ab. Bevorzugt ist die geführte Einheit 4b und der Ausleger 4c einstückig ausgeführt.

In einer inneren Stellung 6 der geführten Einheit 4b der Trägereinheit 3 ist die Mäheinrichtung 2 völlig eingezogen und ragt beim Transport nicht über die Fahrzeugbegrenzung hinaus.

Zur Bewegung der Mäheinrichtung 2 in eine freitragende, über einer zu mähenden Fläche gehaltene Arbeitsstellung wird die geführte Einheit 4b mitsamt dem Ausleger 4c mittels der Führung 4 und des Hydraulikzylinders 5 in eine Mittelstellung 7 bewegt (siehe Figur 2). Durch Weiterbewegen des der geführten Einheit 4b mittels der Führung 4 und des Hydraulikzylinders 5 in Richtung des zu mähenden Geländes erfolgt eine Vergrößerung der Reichweite der Mäheinrichtung 2 entsprechend den unterschiedlichen Einsatzgebieten, bei denen Hindernisse, wie Bäume, Pfosten oder dergleichen, zu ummähen sind.

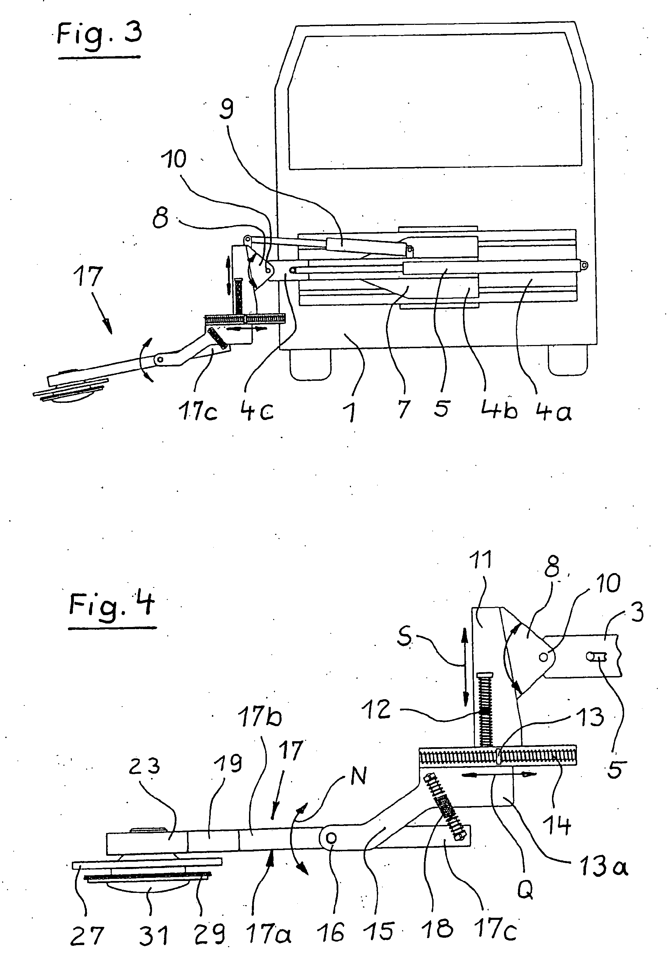

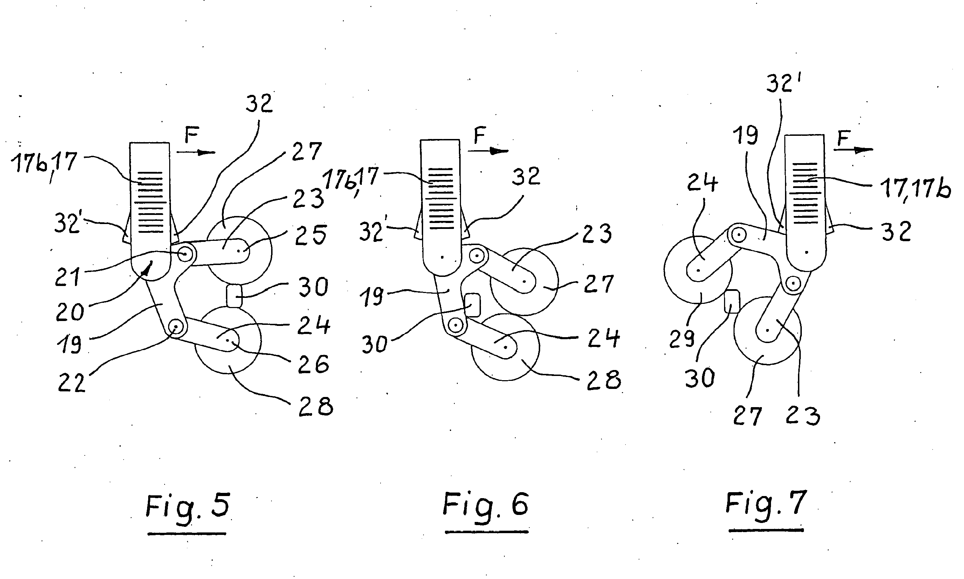

Die Mäheinrichtung 2 ist an der Trägereinheit 3, hier an dem Ausleger 4c der geführten Einheit 4b an einer Schwenkeinrichtung 8 schwenkbar angeordnet. Dadurch wird mittels eines zweiten Hydraulikzylinder 9 die gesamte Mäheinrichtung 2 in Transportstellung nach oben und in Arbeitsstellung um eine Lagerstelle 10 geschwenkt. In Arbeitsstellung ist die Mäheinrichtung 2 schwenkbar angeordnet, so dass eine Anpassung der Lage der Mäheinrichtung 2 an die Neigung eines zu mähenden Geländes erfolgt (Figur 3). An der Schwenkeinrichtung 8 ist entsprechend Figur 4 eine Senkrechtführung 11 zum Ausgleich von Höhenunterschieden des zu mähenden Geländes angeordnet. Die Senkrechtführung 11 wird dazu mittels Federelementen 12 in einer Mittelstellung gehalten. Unterhalb der Senkrechtführung 11 ist eine Querführung 13 vorgesehen, die ebenfalls mittels Federelementen 14 in Mittelstellung zum seitlichen Ausgleich gehalten wird. An einem unteren Teil 15 der Querführung 13 ist in einer Lagerstelle 16 ein Mähbalken 17 auf- und abpendelnd gelagert. Ändert sich beim Mähvorgang die Höhenlage des zu mähenden Geländes, wird der Mähbalken 17 automatisch auf und ab bewegt und passt sich so unterschiedlichen Neigungen des zu mähenden Geländes an und gleicht die Höhenunterschiede des Geländes aus. Mittels eines Federelementes 18 wird der Mähbalken 17 immer nach unten gegen den Geländeuntergrund gedrückt. An dem Mähbalken 17 der Mäheinrichtung 2 ist ein Dreiecklenker 19 an einer Lagerstelle 20 drehbar angelenkt(siehe Figuren 5,6,7), an dessen gegenüber liegenden Enden 21,22 zwei Schenkel 23,24 angelenkt und an deren Enden 25,26 zwei Führungsrollen 27,28 drehbar gelagert angeordnet sind. Die Schwenkbewegung des Dreiecklenkers 19 ist mittels eines am Trägerelement 3 des Mähfahrzeuges 1 angeordneten Anschlagelementes 32 begrenzbar und der Dreiecklenker 19 mit den angeordneten Schneidköpfen 29 ist je nach Bedarf bei unterschiedlich zu mähendem Gelände mit unterschiedlich großen Schneidköpfen 29 auswechselbar vorgesehen. Unterhalb der Führungsrollen 27,28 sind Scheidköpfe 29 (Figur 4) so angeordnet, dass deren Messer nicht über die Mantelflächen der Führungsrollen 27,28 hinausragen und damit ein Hindernis 30, z.B. einen Baumstamm oder einen Pfosten, nicht beschädigen können. Durch eine Kontaktscheibe 31, die unterhalb des Schneidkopfes 30 angeordnet ist und während des Mähvorganges auf dem Geländeuntergrund aufliegt, ist ein gleichmäßiger Abstand des Schneidkopfes 29 zum Geländeuntergrund und damit eine gleiche Schnitthöhe des Grases gewährleistet. Die insbesondere scheibenförmig ausgebildeten Schneidköpfe 29 und die Kontaktscheiben 31 sind vorzugsweise aus Federstahl ausgebildet, und die Kontaktscheiben 31 sind an den Schneidköpfen 29 form, -stoff- oder kraftschlüssig befestigt. In Ausgangsstellung werden die beiden Führungsrollen 27,28 durch eine an den beiden Schenkeln 23,24 angeordnete nicht näher dargestellte Zugfeder in Kontaktposition gehalten und liegen aneinander. Wird ein Hindernis 30 angefahren, werden die beiden an den Schenkeln 23,24 gelagerten Führungsrollen 27,28 gegen die Kraft der Feder auseinandergedrückt (Figur 5) und rollen an dem Hindernis 30 vorbei. Bei Weiterfahrt des Mähfahrzeuges 1 stößt das Hindernis 30 an den Dreiecklenker 19 (Figur 6) und dieser schwenkt entsprechend Figur 7 so um, dass das Hindernis 30 durch Auseinanderdrücken der Führungsrollen 27,28 wieder freigegeben wird und sich das Mähfahrzeug 1 mit der Mäheinrichtung 2 ungehindert weiterbewegen kann. Die Führungsrollen 27,28 schwenken durch die Federkraft in die Ausgangsstellung zurück. Die Schwenkbewegung des Dreiecklenkers 19 wird durch ein am Trägerelement 3 des Mähfahrzeuges 1 angeordnetes Anschlagelement 32 begrenzt.

Die Erfindung beschränkt sich nicht auf das Ausführungsbeispiel, sondern ist in dem angewandten Schneidverfahren und der entsprechenden Einrichtung zum Ummähen von Hindernissen variabel. Sie umfasst insbesondere auch Varianten, die durch Kombination von in Verbindung mit der vorliegenden Erfindung beschriebenen Merkmalen bzw. Elementen gebildet werden können. Alle in der vorstehenden Beschreibung erwähnten sowie aus den Zeichnungen, insbesondere in Verbindung mit der Bezugszeichenliste, entnehmbaren Merkmale sind weitere Bestandteile der Erfindung, auch wenn sie nicht besonders hervorgehoben und in den Ansprüchen erwähnt sind.

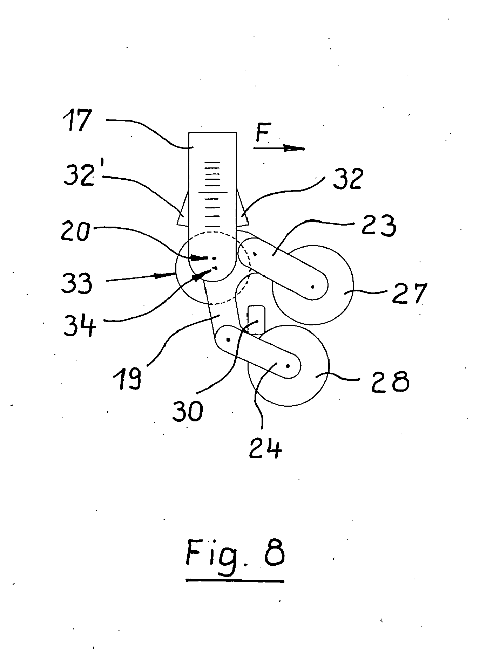

So ist bei einer Ausführungsvariante gemäß der Figur 8 vorgesehen, dass am Dreieckslenker 19, in Fahrtrichtung F gesehen, nach den Führungsrollen 27 und 28 eine weitere Führungsrolle 33 vorgesehen ist, unter der sich ebenfalls ein Schneidkörper 29 befindet. Insbesondere bei Hindernissen mit kleinem Querschnitt ermöglicht diese Ausführungsvariante unabhängig von der Geschwindigkeit der Vorwärtsbewegung der Mäheinrichtung einen sauberen Schnitt bis an das Hindernis heran. Die in der Figur 8 verwendeten Bezugszeichen haben die gleiche Bedeutung wie in den anderen Figuren. Mit dem Bezugszeichen 34 ist das Lager für die weitere Führungsrolle 33 gekennzeichnet. Das Lager 34 kann dabei seitwärts vom Lager 20 liegen oder in das Lager 20 integriert sein.

### Bezugszeichenliste

- 1: Fahrzeug (Mähfahrzeug bzw. Trägerfahrzeug)
- 2: Mäheinrichtung
- 3: Trägereinheit
- 4: Führung
- 4a: führende Einheit
- 4b: geführte Einheit
- 4c: Ausleger
- 5: erster Hydraulikzylinder (für Pos. 4b)
- 6: innere Stellung der geführten Einheit
- 7: mittlere Stellung der geführten Einheit
- 8: Schwenkeinrichtung
- 9: zweiter Hydraulikzylinder (für Pos. 8)
- 10: Lagerstelle
- 11: Senkrechtführung (für Pos. 17)
- 12: Federelement (für Pos. 11)
- 13: Querführung (für Pos. 17)
- 13a: Grundteil
- 14: Federelement (für Pos. 13)
- 15: Abragen der Schenkel (an Pos. 13a)
- 16: Lagerstelle (an Pos. 15)
- 17: Mähbalken
- 17a: Tragbalken
- 17b: äußerer Abschnitt
- 17c: innerer Abschnitt
- 18: Feder (für Pos. 17a)
- 19: Dreiecklenker
- 20: Lagerstelle (für Pos. 19)
- 21: Ende des Dreiecklenkers, mit Lager für Pos. 23
- 22: Ende des Dreiecklenkers, mit Lager für Pos. 24
- 23: Schenkel
- 24: Schenkel
- 25: freies Ende des Schenkels 25, mit Lager für Pos. 27
- 26: freies Ende des Schenkels 24, mit Lager für Pos. 28
- 27: Führungsrolle
- 28: Führungsrolle
- 29: Schneidkopf
- 30: Hindernis
- 31: Kontaktscheibe
- 32, 32': Anschlagelemente
- 33: Führungsrolle
- 34: Lager für die Führungsrolle 33
- F: Pfeil (die Fahrtrichtung
- N: Pfeil (Schwenkbewegung bezüglich der Neigung)
- Q: Pfeil (Querbewegung der Mäheinrichtung 2)
- S: Pfeil (Senkrechtbewegung der Mäheinrichtung 2)

## Patentansprüche

1. Mäheinrichtung, welche zu ihrer Verwendung an ein Fahrzeug wahlweise ankoppelbar ist, bestehend aus
- wenigstens einem wenigsten einen Schneidkopf aufweisenden Mähbalken und
- einer Trägereinheit sowie
- Mitteln zur Verbindung des Mähbalkens mit der Trägereinheit, und
- hydraulischen Antriebsmitteln, die von einem Hydraulikantrieb des Fahrzeuges versorgt werden,
**dadurch gekennzeichnet, dass**
die Mittel derart sind, dass der Mähbalken von einer Transportstellung in eine Arbeitsstellung und wieder zurück schwenkbar ist, wobei
die Mittel aber auch derart sind, dass beim Arbeiten, also dem Mähen, der Mähbalken in seiner Höhenlage zum zu mähenden Gelände und in seiner Neigung zum zu mähenden Gelände und in seiner Position zum Fahrzeug variabel beweglich ist, wobei diese variable Beweglichkeit derart ist, dass ausgehend von einer Grundstellung für das Mähen der Mähbalken bzw. der wenigstens eine an ihm angeordnete Schneidkopf dem jeweiligen Geländeprofil folgt, wobei der Grundantrieb der Mäheinrichtung hydraulisch ist, wobei der wenigstens eine bzw. die Schneidköpfe mittels Zahnriementrieb oder Kettentrieb oder Seilzugtrieb angetrieben werden, und wobei deren Antrieb ein Hydraulikmotor ist, der vorzugsweise an einem Abschnitt des Mähbalkens (17), vorzugsweise an dessen innerem Abschnitt (17c) angeordnet ist.

2. Mäheinrichtung nach Anspruch 1,
**dadurch gekennzeichnet, dass**
eine an einer Trägereinheit (3) befestigte, über einem zu mähenden Gelände freitragend gehaltene und schwenkbare Mäheinrichtung (2) drehbar gelagerte Führungsrollen (27,28) und Schneidköpfe (29) aufweist, wobei die Mäheinrichtung (2) in Arbeitsstellung für unterschiedliche Reichweiten ausfahrbar und zur Anpassung an Neigungen von zu mähendem Gelände schwenkbar ausgebildet ist, wobei die Mäheinrichtung (2) zum Ausgleich von Höhenunterschieden eine Senkrechtführung (11) aufweist und wobei durch Schwenken eines an einem Mähbalken (17) angelenkten Dreiecklenkers (19) auf dem zu mähenden Gelände stehende Hindernisse (30) durch eine kontinuierliche Weiterfahrt des Mähfahrzeuges (1) ummähbar sind, und wobei
die Mäheinrichtung mit der Trägereinheit (3) an dem Mähfahrzeug (1) angekoppelt ist.

3. Mäheinrichtung nach Anspruch 1 oder 2,
**dadurch gekennzeichnet, dass**
die Mäheinrichtung (2) mittels einer
Schwenkeinrichtung (8) in Verbindung mit einem Hydraulikzylinder (9) in Arbeitsstellung in unterschiedliche Winkellagen entsprechend des zu mähenden Geländes und in eine Transportstellung
einstellbar vorgesehen ist.

4. Mäheinrichtung nach Anspruch 1, 2 oder 3,
**dadurch gekennzeichnet, dass**
mittels einer an der Trägereinheit (3) angeordneten Führung (4) und eines Hydraulikzylinders (5) die an der Trägereinheit (3) angeordnete Mäheinrichtung (2) quer zur Fahrtrichtung (F) bewegbar ist.

5. Mäheinrichtung nach einem der Ansprüche 1 bis 4, **dadurch gekennzeichnet, dass**
die an der Schwenkeinrichtung (8) der Mäheinrichtung (2) angeordnete Senkrechtführung (11) zum Ausgleich von Höhenunterschieden des zu mähenden Geländes mittels Federelementen (12) in einer Grundstellung gehalten ist.

6. Mäheinrichtung nach einem der Ansprüche 1 bis 5, **dadurch gekennzeichnet, dass**
unterhalb der Senkrechtführung (11) eine mittels Federelementen (14) in einer Mittelstellung gehaltene Querführung (13) zum seitlichen Ausgleich vorgesehen ist, wobei an der Querführung (13) in einer Lagerstelle (16) der Mähbalken (17) pendelnd gelagert ist.

7. Mäheinrichtung nach einem der Ansprüche 1 bis 6, **dadurch gekennzeichnet, dass**
mittels eines Federelementes (18) der Mähbalken (17) gegen einen Geländeuntergrund drückbar ist.

8. Mäheinrichtung nach einem der Ansprüche 1 bis 7, **dadurch gekennzeichnet, dass**
der an dem Mähbalken (17) der Mäheinrichtung (2) drehbar angelenkte Dreiecklenker (19) an seinen einander gegenüberliegen Enden (21,22) angelenkte Schenkel (23,24) aufweist, wobei an Enden (25,26) der Schenkel (23,24) die drehbar gelagerten Führungsrollen (27,28) angeordnet sind.

9. Mäheinrichtung nach einem der Ansprüche 1 bis 8, **dadurch gekennzeichnet, dass**
die Schwenkbewegung des Dreiecklenkers (19) mittels eines an der Trägereinheit (3) der Mäheinrichtung (2) angeordneten Anschlagelementes (32 bzw. 32') begrenzbar ist.

10. Mäheinrichtung nach einem der Ansprüche 1 bis 19, **dadurch gekennzeichnet, dass**
die Schneidköpfe (29) unterhalb der Führungsrollen derart angeordnet sind, dass deren Messer nicht über die Mantelflächen der Führungsrollen (27,28) hinausragen.

11. Mäheinrichtung nach einem der Ansprüche 1 bis 10, **dadurch gekennzeichnet, dass**
zur gleichmäßigen Höheneinstellung beim Mähvorgang unterhalb des Mähbalkens (17), vorzugsweise unterhalb seines Tragbalkens (17a) oder des bzw. der Schneidköpfe wenigstens ein Kontaktelement (31) angeordnet ist, das bzw. die während des Mähvorganges auf dem Geländeuntergrund aufliegen.

12. Mäheinrichtung nach einem der Ansprüche 1 bis 11, **dadurch gekennzeichnet, dass**
die Führungsrollen (27,28) in einer Ausgangsstellung durch Federelemente in Kontaktposition gehalten und beim Anfahren eines Hindernisses (30) durch das Hindernis (30) selbst entgegen der Federkraft auseinander drückbar sind, wobei nach Ummähen des Hindernisses (30) mittels der Federelemente die Führungsrollen (27,28) wieder in die Ausgangsstellung zurückführbar sind.

13. Mäheinrichtung nach einem der Ansprüche 1 bis 12, **dadurch gekennzeichnet, dass**
der Dreiecklenker (19) beim Anschlag an das Hindernis derart schwenkbar ist, dass das Hindernis (30) bei Weiterfahrt des Mähfahrzeuges (1) die beiden Führungsrollen soweit auseinander drückt, dass eine
kontinuierliche Weiterfahrt des Mähfahrzeuges (1) erfolgt.

14. Mäheinrichtung nach einem der Ansprüche 1 bis 13, **dadurch gekennzeichnet, dass**
die insbesondere scheibenförmig ausgebildeten Schneidköpfe (29) und die Kontaktscheiben (31) vorzugsweise aus Federstahl ausgebildet sind, wobei die Kontaktscheiben (31) an den Schneidköpfen (29) form, - stoff- oder kraftschlüssig befestigt sind.

15. Mäheinrichtung nach einem der Ansprüche 1 bis 14, **dadurch gekennzeichnet, dass**
der am Mähbalken (17) der Mäheinrichtung (2) angelenkte Dreiecklenker (19) mitsamt den angeordneten Schneidköpfen (29) oder die Schneidköpfe (29) selbst für unterschiedliche Schnittbreiten und Hindernisse auswechselbar vorgesehen sind.
